# EUROPÄISCHE PATENTSCHRIFT

(11) **EP 3 884 536 B1**
(45) Veröffentlichungstag und Bekanntmachung des Hinweises auf die Patenterteilung: **09.03.2022**
(21) Anmeldenummer: 19801783.2
(22) Anmeldetag: 04.11.2019
(51) Int. Cl.: H01M 8/0297, H01M 8/0254, H01M 8/0206, B23K 20/00, B23K 20/04, B23K 26/346, H01M 8/0267

(54) **VERFAHREN ZUR HERSTELLUNG EINES BIPOLARPLATTENSTRANGS BZW. EINER BIPOLARPLATTE UND VORRICHTUNG ZUR DURCHFÜHRUNG DER VERFAHREN**
PROCESS FOR MANUFACTURING A BIPOLAR PLATE BELT AND A BIPOLAR PLATE, RESPECTIVELY, AND DEVICE FOR PERFORMING THE PROCESSES
PROCÉDÉ POUR LA MANUFACTURE D'UNE BANDE DE PLAQUES BIPOLAIRES ET DE PLAQUES BIPOLAIRES, RESPECTIVEMENT, ET DISPOSITIF POUR RÉALISER LES PROCÉDÉS

(30) Priorität: 25.02.2019 DE 102019202493
(43) Veröffentlichungstag der Anmeldung: 29.09.2021
(73) Patentinhaber: Audi AG, 85045 Ingolstadt (DE)
(72) Erfinder: BLOEHS, Wolfgang, 85049 Ingolstadt (DE)
(74) Vertreter: Hentrich Patent- & Rechtsanwälte PartG mbB
(86) Internationale Anmeldenummer: PCT/EP2019/080047
(87) Internationale Veröffentlichungsnummer: WO 2020/173585

(56) Entgegenhaltungen:
- EP-A2- 2 090 395
- DE-A1-102010 054 617
- DE-A1-102016 125 502
- JP-A- 2009 193 868
- JP-A- 2013 152 941

## Beschreibung

Die Erfindung betrifft ein Verfahren zur Herstellung eines Bipolarplattenstrangs, der eine Mehrzahl an zusammenhängenden Bipolarplatten einer Brennstoffzelle aufweist. Die Erfindung betrifft auch ein Verfahren zur Herstellung einer Bipolarplatte einer Brennstoffzelle sowie eine Vorrichtung zur Durchführung der beiden Verfahren.

Bipolarplatten werden bei Brennstoffzellen und den Brennstoffzellenstapeln verwendet. Mithilfe der Bipolarplatten werden dabei der Brennstoff einerseits an eine benachbarte Anode einer ersten Brennstoffzelle und das Kathodengas an eine Kathode einer benachbarten zweiten Brennstoffzelle geleitet und verteilt, wobei die Bipolarplatte zudem Leitungen zur Führung eines Kühl-mediums vorsieht. Eine Bipolarplatte ist meist aus zwei als Halbschalen gebildeten Unipolarplatten hergestellt, die bei aus Graphit gebildeten Bipolarplatten miteinander verklebt werden. Metallische Bipolarplatten umfassen typischerweise zwei zumindest abschnittsweise miteinander verschweißte Unipolarplatten.

Die EP 2 090 395 A2 beschreibt eine Vorrichtung zur Herstellung von metallischen Werkstoffverbunden und Verbundhalbzeugen durch Warmwalzplattieren. Es findet eine Kurzzeiterwärmung von mindestens einem Metallband mithilfe von elektromagnetischer Induktion sowie eine Laserbestrahlung statt, bevor wenigstens zwei Bänder in einen Walzspalt einlaufen. Wegen der extremen metallurgischen Unverträglichkeit des Grundwerkstoffes des Metallbandes wird zwischen dem Grundwerkstoff und einem Auflagewerkstoff je ein Zwischenlagewerkstoff eingeführt. Diese Druckschrift zeigt die Merkmale des Oberbegriffs des Vorrichtungsanspruchs 10.

Die JP 2009 193 868 A und die JP 2013 152 941 A beschreiben ein Rollenschweißverfahren, bei dem zwei Unipolarplattenstränge an einer randseitigen Naht gefügt werden. Die DE 10 2016 125502 A1 beschreibt eine Vorrichtung zur Herstellung von Bipolarplatten für Brennstoffzellen unter Verwendung eines Nahtschweißers.

Die DE 10 2016 125 502 A1 beschreibt eine Vorrichtung zur Herstellung von Bipolarplatten für Brennstoffzellen, wobei die Substratplatten automatisch zunächst zu einer Umformeinrichtung und danach zu einer Fügeeinrichtung transportiert werden. Die Umformeinrichtung prägt dabei mittels eines Prägewerkzeugs Kanäle in die Substratplatten.

In der DE 10 2010 054 617 A1 wird ein Verfahren zum Herstellen von Bipolarplatten beschreiben, bei dem zunächst ein Umformen und dann ein Fügen von Polplatten zu einer Bipolarplatte erfolgen. Innerhalb der Pro-duktionslinie wird ein Reinigungsprozess zum Reinigen der Polplatten mittels eines flüssigen Mediums durchgeführt. Diese Druckschrift verweist auch auf die Möglichkeit, dass das Fügen metallischer Polplatten mittels eines Schweißvorgangs oder Lötvorgangs durchgeführt werden kann, wobei auch andere Fügeverfahren wie Kleben oder mechanische Fügeverfahren wie Falzen ebenfalls möglich sein sollen.

In der US 2005 / 0 252 892 A1 ist ein Schweißverfahren zum Verschweißen zweier Unipolarplatten zu einer Bipolarplatte beschrieben. Auch die US 2004 / 0 072 053 A1 beschreibt ein Verfahren sowie eine Vorrichtung zum Verschweißen zweier Unipolarplatten zu einer Bipolarplatte bzw. ein Verschweißen der beiden Unipolarplatten mit einer Abstandsplatte. Letztlich zeigt auch die WO 2007 / 135 509 A1 die Möglichkeit auf, zwei Unipolarplatten zu einer Bipolarplatte mittels eines Laserstrahls zu Verschweißen.

Einige der in vorstehend erwähnten Druckschriften beschriebenen Verfahren und Vorrichtungen richten den Laserstrahl zum Schweißen auf die Unipolarplatten im Wesentlichen senkrecht zur Ebene, in der sich die Unipolarplatten erstrecken. Dabei entstehen Schweißnähte, wobei durchgängige Nähte entstehen können, die eine Abdichtfunktion erfüllen. Es können aber auch sogenannte Stepp-Nähte gebildet werden, die eine mechanische Stabilisierung der Bipolarplatte und eine verbesserte elektrische Kontaktierung der Unipolarplatten bereitstellen.

Es hat sich herausgestellt, dass bei solchen lasergeschweißten Bipolarplatte das Risiko einer Porenbildung vorliegt, die zu lokalen Undichtigkeiten hinsichtlich eines Medienflusses führen können. Solche Undichtigkeiten treten statistisch insbesondere an Schweißnähten auf, die eine besonders weitreichende Erstreckung besitzen. Außerdem ist bekannt, dass Undichtigkeiten mit vermehrter Häufigkeit an den Nahtanfangs- bzw. -endstellen auftreten. D. h. das Risiko von Undichtigkeiten steigt mit der Anzahl der eingesetzten Schweißnähte sowie mit deren Länge. Zudem hat es sich für das Laserschweißen als aufwändig und schwierig herausgestellt, die beiden Unipolarplatten in einer Spannvorrichtung derart spannen zu können, damit der Laserstrahl fokussiert an der gewünschten, zu schweißenden Stelle auftrifft. Manche Bipolarplattenhersteller sind deshalb dazu übergegangen, zusätzliche Prägungen an Kanälen und/oder Stegen der Unipolarplatten vorzusehen, um Platz für die Spannmittel der Spannvorrichtung bereitzustellen, die eine ausreichende Breite für die zu setzende Schweißnaht vorweisen. Die zusätzlichen Prägungen schaffen zudem Reserven hinsichtlich auszugleichender Fertigungstoleranzen bei der Bauteilpositionierung.

Es ist daher die Aufgabe der vorliegenden Erfindung, ein Verfahren zur Herstellung eines Bipolarplattenstrangs, ein Verfahren zur Herstellung einer Bipolarplatte sowie eine Vorrichtung zur Durchführung der Verfahren anzugeben, die zumindest einige der vorstehend erwähnten Nachteile mindern oder gänzlich beseitigen und zugleich ein selektives Fügen der Einzelteile gewährleisten.

Diese Aufgabe wird gelöst durch ein Verfahren zur Herstellung eines Bipolarplattenstrangs mit den Merkmalen des Anspruchs 1, durch ein Verfahren zur Herstellung einer Bipolarplatte mit den Merkmalen des Anspruchs 9 und durch eine Vorrichtung mit den Merkmalen des Anspruchs 10. Vorteilhafte Ausgestaltungen mit zweckmäßigen Weiterbildungen der Erfindung sind in den abhängigen Ansprüchen angegeben.

Das Verfahren zur Herstellung eines Bipolarplattenstrangs, der eine Mehrzahl an zusammenhängenden Bipolarplatten einer Brennstoffzelle aufweist, umfasst insbesondere die folgenden Schritte:
- Bereitstellen eines ersten Unipolarplattenstrangs und eines zweiten Unipolarplattenstrangs, wobei die Unipolarplattenstränge eine Mehrzahl von zumindest vorgeformten Stegen und eine Mehrzahl von zumindest vorgeformten, zwischen je zwei benachbarten Stegen verlaufenden Kanälen umfassen,
- Führen der Unipolarplattenstränge in Richtung eines Walzspalts eines mit einer Walzstruktur versehenen Walzenpaares einer Walzeinrichtung, wobei die Walzenstruktur der Walzen des Walzenpaares aktive Walzenerhebungen und passive Walzenerhebungen aufweist,
- Lokales Erhitzen mindestens eines Oberflächenbereichs einer Oberfläche von einem der oder von beiden der Unipolarplattenstränge, wobei der Oberflächenbereich unmittelbar vor oder bei einem Eintritt der Unipolarplattenstränge in den Walzspalt auf eine Fügetemperatur erwärmt ist, und
- Fügen der Unipolarplattenstränge an dem mindestens einen Oberflächenbereich zu einem Bipolarplattenstrang beim Transport der Unipolarplattenstränge durch den Walzspalt unter Druckeinwirkung, wobei die aktiven Walzenerhebungen die beiden sich im Walzspalt befindlichen Unipolarplattenstränge fügen, und wobei die passiven Walzenerhebungen die beiden sich im Walzspalt befindlichen Unipolarplattenstränge nicht fügen.

Beim Erhitzen der Unipolarplattenstränge auf die Fügetemperatur kann beispielsweise ein Ofen eingesetzt werden. Beim Transport der beiden Unipolarplattenstränge werden diese dann zuverlässig zu einem Bipolarplattenstrang gefügt.

Vorzugsweise erfolgt das lokale Erhitzen mittels eines Laserstrahls oder mittels mehrerer Laserstrahlen mindestens einer Lasereinrichtung. Es können auch mehrere Lasereinrichtungen vorhanden sein. Der Laserstrahl oder die Laserstrahlen werden dabei vorzugsweise lateral bezüglich einer Vorschubrichtung der Walzeinrichtung an zumindest einer der Oberflächen, vorzugsweise aber an beiden Oberflächen der beiden zu fügenden Unipolarplattensträngen, fokussiert oder geeignet geformt, so dass zumindest an der Oberfläche oder zumindest oberflächennah die für ein Verschweißen notwendige Temperatur, nämlich die Fügetemperatur vorherrscht. Beim Transport durch den Walzspalt unter Druckeinwirkung werden dann die für ein endgültiges Fügen der beiden Unipolarplattenstränge erforderlichen Fügekräfte aufgebracht.

Durch dieses selektive Walzschweißen wird neben dem eigentlichen Schweißwerkzeug keine zusätzliche, in der Regel höchst aufwendige Spanntechnik mehr benötigt. Aufgrund der Einsparung der Spanntechnik lassen sich zudem die Kanal- und Steggeometrien der Bipolarplatten strömungstechnisch weiter optimieren.

Vorzugsweise ist die Lasereinrichtung ausgestaltet, den Laserstrahl bezüglich der Vorschubrichtung des Walzenpaares senkrecht, insbesondere, lateral fokussiert oder mit angepasster Intensitätsverteilung zu bewegen, um mehrere Kontaktpunkte oder Kontaktlinien, mithin also mehrere Oberflächenbereiche der beiden Unipolarplatten auf die Fügetemperatur zu Erwärmen.

Anstelle eines solchen dynamischen Verstellens der Ausrichtung und/oder Fokussierung oder Formens des Laserstrahls hat es sich aber auch als vorteilhaft herausgestellt, wenn eine stationäre Lasereinrichtung zusätzlich eine Strahlaufteilungseinrichtung umfasst, die ausgestaltet ist, den Laserstrahl in eine Mehrzahl von Laserstrahlen aufzuteilen, derart, dass eine Mehrzahl von Oberflächenbereichen der Unipolarplattenstränge gleichzeitig erwärmbar ist.

Es kann Konstellationen geben, bei denen die Erhitzung mittels der Lasereinrichtung entweder aufgrund des Aufteilens des Laserstrahls oder aufgrund der nur kurzzeitigen Bestrahlung mit dem Laser alleine nicht ausreicht, um das Material der beiden Unipolarplattenstränge auf seine Fügetemperatur zu erwärmen. Es hat sich daher als sinnvoll herausgestellt, wenn mindestens einer der, vorzugsweise beide der Unipolarplattenstränge vor der Führung an den Walzspalt vorerwärmt werden. Hierzu kann eine Induktionsheizeinrichtung oder auch ein Infrarot-Strahler vorhanden sein.

Wenn die beiden zu fügenden Bleche der Unipolarplattenstränge noch nicht vorgeformt und gegebenenfalls noch eben sind, mithin als Flachmaterial vorliegen, hat es sich als vorteilhaft erwiesen, wenn die Stege und die Kanäle mittels mindestens einer Prägeeinrichtung geprägt werden, bevor die Unipolarplattenstränge der Walzeinrichtung bereitgestellt werden. Dabei ist zudem die Möglichkeit eröffnet, dass die Stege und die Kanäle der Unipolarplattenstränge bereits in ihre endgültige Form gepresst sind; also nicht in einen vorgeformten sondern in einen fertig-geformten Zustand dem Walzenpaar zugeführt werden.

Werden jedoch mittels der Prägeeinrichtung lediglich vorgeformte Stege und Kanäle an den Bipolarplattenstränge ausgebildet, so ist es von Vorteil, wenn die vorgeformten Stege und die vorgeformten Kanäle beim Transport durch den Walzspalt unter Druckeinwirkung mittels der Walzstrukturen in ihre endgültige Form gepresst werden.

In Abhängigkeit der Werkstoffauswahl oder Werkstoffkombination der Unipolarplatten oder Unipolarplattenstränge hat es sich als sinnvoll herausgestellt, wenn der Bipolarplattenstrang mittels einer Wärmeeinrichtung entspannt, insbesondere nacherwärmt oder geglüht wird. Dies erhöht die Verbindungsfestigkeit der beiden Unipolarplatten zur Bipolarplatte.

Um die für einen Einsatz in einem Brennstoffzellenstapel benötigte Abdichtung gegenüber den Reaktionsmedien und oder eine zuverlässige Abdichtung gegen den Austritt von Kühlmittel bereitzustellen, ist es vorteilhaft, wenn auf mindestens eine, vorzugsweise auf beide der Außenoberflächen des Bipolarplattenstrangs mindestens eine Dichtung mittels einer Aufbringeinrichtung aufgebracht wird. Hierzu kann die Aufbringeinrichtung beispielsweise eine Druckvorrichtung sein, die im Siebdruck ein Dichtungsmaterial auf die Außenoberflächen des Bipolarplattenstrangs aufdruckt. Nach dem Aufbringen des Dichtungsmaterials kann dieses bei einer vorgegebenen Temperatur aushärten, wozu die Aufbringeinrichtung zusätzlich über eine geeignete Heizeinrichtung verfügen kann.

Abhängig vom gewählten Werkstoffkonzept der gesamten Brennstoffzelle ist oftmals ein zusätzliches Beschichten der Bipolarplatte gewünscht. Es hat sich in diesem Zusammenhang deshalb als sinnvoll erwiesen, wenn auf mindestens eine, vorzugsweise auf beide der Außenoberflächen des Bipolarplattenstrangs mindestens eine Beschichtung mittels einer Beschichtungseinrichtung aufgebracht wird. Auch hierzu kann eine Druckvorrichtung Verwendung finden, die beispielsweise mittels eines Rollendrucks das gewünschte Beschichtungsmaterial auf die Außenoberflächen aufbringt. Die Druckvorrichtung kann dabei ebenfalls eine geeignete Heizeinrichtung umfassen, um das aufgebrachte Beschichtungsmaterial zu trocknen. Das Beschichten kann beispielsweise nach dem Aufbringen einer Dichtung erfolgen. Es besteht allerdings auch die Möglichkeit, dass zuerst die Beschichtung aufgebracht wird und erst zeitlich nachfolgend die Außenoberflächen mit mindestens einer Dichtung versehen werden.

Zur Herstellung einer auf Endmaß geschnittenen Bipolarplatte für den Einsatz in einem Brennstoffzellenstapel, ist die Möglichkeit eröffnet, dass der Bipolarplattenstrang mittels einer Schneideinrichtung in einzelne Bipolarplatten zerteilt wird. Das Schneiden der noch miteinander verbundenen Bipolarplatten in stapelbare Einheiten am Ende des Herstellprozesses hat den Vorteil, dass auf diese Weise die Positionstoleranzen der einzelnen Prozessschritte deutlich reduziert werden können.

Die für das Verfahren zur Herstellung eines Bipolarplattenstrangs beschriebenen Vorteile und bevorzugten Ausführungsvarianten gelten auch für das erfindungsgemäße Verfahren zur Herstellung einer Bipolarplatte einer Brennstoffzelle, da die hierzu verwendete Vorrichtung ebenfalls dazu geeignet und ausgelegt ist, anstelle von Stangenmaterialien auch bereits auf Endmaß geschnittene Unipolarplatten zu einer Bipolarplatte zu fügen, mithin zu verschweißen.

Das erfindungsgemäße Verfahren zur Herstellung der Bipolarplatte umfasst daher insbesondere die folgenden Schritte:
- Bereitstellen einer ersten Unipolarplatte und einer zweiten Unipo-larplatte, wobei die Unipolarplatten eine Mehrzahl von zumindest vorgeformten Stegen und eine Mehrzahl von zumindest vorgeformten, zwischen je zwei benachbarten Stegen verlaufenden Kanälen umfassen,
- Führen der Unipolarplatten in Richtung eines Walzspalts eines mit einer Walzstruktur versehenen Walzenpaares einer Walzeinrichtung, wobei die Walzenstruktur der Walzen des Walzenpaares aktive Walzenerhebungen und passive Walzenerhebungen aufweist,
- Lokales Erhitzen mindestens eines Oberflächenbereichs einer Oberfläche von einer der oder von beiden der Unipolarplatten, wobei der Oberflächenbereich unmittelbar vor oder bei einem Eintritt der Unipolarpolarplatten in den Walzspalt auf eine Fügetemperatur erwärmt ist, und
- Fügen der Unipolarplatten an dem mindestens einen Oberflä-chenbereich zu einer Bipolarplatte beim Transport der Unipolarplatten durch den Walzspalt unter Druckeinwirkung, wobei die aktiven Walzenerhebungen die beiden sich im Walzspalt befindlichen Unipolarplatten fügen, und wobei die passiven Walzenerhebungen die beiden sich im Walzspalt befindlichen Unipolarplatten nicht fügen.

Auch dieses Verfahren zum Fügen zweier Unipolarplatten zu einer Bipolarplatte beseitigt die aus dem Stand der Technik bekannten Nachteile.

Auch hier hat es sich als sinnvoll erwiesen, wenn das lokale Erhitzen mittels eines Laserstrahls oder mittels mehrerer Laserstrahlen von mindestens einer Lasereinrichtung erfolgt. Der Einsatz mehrerer Lasereinrichtungen ist möglich.

Die erfindungsgemäße Vorrichtung zur Herstellung eines Bipolarplattenstrangs bzw. zur Herstellung einer Bipolarplatte umfasst insbesondere eine Walzeinrichtung mit einem zwischen sich einen Walzspalt ausbildenden Walzenpaar. Zudem ist eine Erhitzungseinrichtung vorhanden, die ausgebildet ist, mindestens einen Oberflächenbereich einer Oberfläche von einem oder von beiden der beiden Unipolarplattenstränge auf eine Fügetemperatur zu erhöhen. Alternativ oder ergänzend kann sie auch ausgebildet sein, einen Oberflächenbereich einer Oberfläche von einer oder von beiden der Unipolarplatten auf eine Fügetemperatur zu erwärmen. Zumindest eine der Walzen des Walzenpaares ist mit einer Walzstruktur versehen, die ausgebildet ist, eine Mehrzahl von auf Fügetemperatur erwärmten Oberflächenbereichen der zwei Unipolarplatten oder der zwei Unipolarplattensträngen beim Transport durch den Walzspalt derart zu pressen, dass die beiden Unipolarplattenstränge zu einem Bipolarplattenstrang an den Oberflächenbereichen gefügt werden, oder dass die beiden Unipolarplatten zu einer Bipolarplatte an den Oberflächenbereichen gefügt werden.

Beispielsweise bilden die Oberflächenbereiche im Walzspalt eine Mehrzahl von Kontaktlinien aus aufeinanderliegenden Stegen von zwei Unipolarplatten oder zwei Unipolarplattensträngen aus, wenn sie beim Transport durch den Walzspalt unter Druckeinwirkung gepresst werden.

Die Erhitzungseinrichtung ist vorzugsweise als eine Lasereinrichtung gebildet, die mindestens eine Optik aufweist, die ausgebildet ist mindestens einen Laserstrahl oder mehrere Laserstrahlen in einem Bereich des oder in unmittelbarer Nähe des Walzspalts zu fokussieren oder geeignet zu formen. Die Lasereinrichtung ist ausgebildet, mindestens einen Oberflächenbereich einer Oberfläche von einem oder von beiden der beiden Unipolarplattenstränge auf eine Fügetemperatur zu erhöhen. Es besteht die Möglichkeit, dass mehrere Lasereinrichtungen eingesetzt werden.

Die Lasereinrichtung ist mit anderen Worten also derart gebildet, das Material der Unipolarplatten an ihren zu fügenden Bereichen, mithin lokal an der Oberfläche der Unipolarplatten, insbesondere lokal an den Stegen der Unipolarplattenstränge oder Unipolarplatten, auf eine Fügetemperatur zu erhitzen. Die nachfolgende Walzeinrichtung ist also derart gebildet, beim Transportieren der beiden Unipolarplatten oder der beiden Unipolarplattenstränge durch den Walzspalt die nötige Fügekraft aufzubringen, um die beiden Unipolarplatten oder Unipolarplattenstränge dauerhaft miteinander zu einer Bipolarplatte oder zu einem Bipolarplattenstrang zu verbinden.

Der Lasereinrichtung ist vorzugsweise eine Steuerung zugewiesen, die ausgebildet ist, die Optik der Lasereinrichtung anzusteuern. Die Optik der Lasereinrichtung ist insbesondere in einer lateralen Richtung verstellbar, derart, dass der Laserstrahl im Wesentlichen senkrecht zur Vorschubrichtung der Walzeinrichtung verstellbar ist. Dabei ist die Optik so schnell bewegbar, dass eine Mehrzahl von Oberflächenbereichen mittels des Laserstrahls erwärmbar ist, um beim Transport durch den Walzspalt eine Mehrzahl von gefügten Kontaktlinien oder Kontaktpunkten zwischen den beiden Unipolarplatten oder zwischen den beiden Unipolarplattensträngen auszubilden.

Alternativ oder ergänzend ist die Möglichkeit eröffnet, dass der Lasereinrichtung eine Strahlaufteilungseinrichtung zur Aufteilung des Laserstrahls zugewiesen ist, derart, dass eine Mehrzahl von Oberflächenbereichen oder Kontaktlinien gleichzeitig erwärmbar ist.

Durch den Einsatz einer derartigen Vorrichtung werden die Risiken von Undichtigkeiten bei der späteren Bipolarplatte prinzipbedingt dramatisch reduziert, wodurch sich auch der zu erwartende Fertigungsausschuss erheblich verringert. Die Lasereinrichtung, insbesondere deren Optik erlaubt eine gute örtliche und zeitliche Steuerbarkeit (bzw. bei Bedarf auch Regelbarkeit) der Wärmequelle und damit eine robuste Prozessführung und eine hohe Schweißqualität.

Eine vorteilhafte Weitergestaltung der Vorrichtung sieht vor, dass zumindest eine der Unipolarplatten oder zumindest einer der Unipolarplattenstränge mittels einer Richteinrichtung gerichtet, mithin geglättet wird, bevor Stege oder Kanäle darin eingebracht werden. Hierzu weist die Vorrichtung eine, vorzugsweise sogar zwei Richteinrichtungen auf.

Zudem ist die Möglichkeit eröffnet, dass eine Prägeeinrichtung vorhanden ist, um die Mehrzahl von Stegen und die Mehrzahl von Kanälen zumindest vorzuformen, insbesondere in das Material zu prägen. Dabei ist es möglich, dass jedem Unipolarplattenstrang eine eigene Prägeeinrichtung zugewiesen ist. Alternativ kann auch eine kombinierte Prägeeinrichtung vorgesehen sein, die die beiden Unipolarplattenstränge prägt.

Um die Unipolarplattenstränge oder die Unipolarplatten vor der Führung an den Walzspalt vorzuerwärmen, hat es sich als vorteilhaft erwiesen, wenn mindestens eine Induktionsheizeinrichtung vorhanden ist, die eine der Unipolarplatten oder der Unipolarplattenstränge induktiv erhitzt. Alternativ oder ergänzend kann auch ein Infrarot-Strahler zur Vorerwärmung des Materials vorhanden sein. Hierdurch muss der nachfolgende Laserstrahl eine geringere Energie aufweisen, um die Materialen auf ihre Fügetemperatur zu erhitzen, womit die Lasereinrichtung kleiner ausgelegt werden kann.

Die Vorrichtung kann außerdem eine der Walzeinrichtung nachgelagerte Wärmeeinrichtung umfassen, die ausgebildet ist, das Material des Bipolarplattenstrangs oder der Bipolarplatte zu entspannen, insbesondere zu glühen.

Zudem kann die Vorrichtung eine der Walzeinrichtung nachgelagerte Aufbringeinrichtung umfassen, die ausgebildet ist, auf mindestens eine der Außenoberflächen des Bipolarplattenstrangs oder der Bipolarplatte eine Dichtung aufzubringen. Hierbei kann eine wie vorangehend bereits erläuterte Druckvorrichtung Einsatz finden.

Zudem ist die Möglichkeit eröffnet, dass die Vorrichtung eine der Walzeinrichtung nachgelagerte Beschichtungseinrichtung umfasst, die ausgebildet ist, mindestens eine der Außenoberflächen des Bipolarplattenstrangs oder der Bipolarplatte mit einer Beschichtung zu versehen. Auch hierzu kann diese die vorstehend bereits erwähnte Druckvorrichtung umfassen, die bspw. die Beschichtung im Rollendruckverfahren aufbringt.

Die Vorrichtung kann zudem noch eine Schneideinrichtung umfassen, die ausgebildet ist einen Bipolarplattenstrang in einzelne Bipolarplatten zu vereinzeln oder eine Bipolarplatte auf ein Endmaß zu beschneiden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine geschnittene Detailansicht eines Ausschnitts eines Brennstoffzellenstapels mit einer aus zwei Unipolarplatten gebildeten Bipolarplatte,
- Fig. 2: eine schematische Ansicht eines Systems zur Herstellung eines Bipolarplattenstrangs aus zwei Unipolarplattensträngen und/oder einer Bipolarplatte aus zwei Unipolarplatten,
- Fig. 3: eine Detailansicht auf den Walzspalt des Walzenpaares mit darin befindlichen Unipolarplatten oder darin befindlichen Unipolarplattensträngen, und
- Fig. 4: eine schematische Ansicht einer Vorrichtung zur Herstellung eines Bipolarplattenstrangs aus zwei Unipolarplattensträngen und/oder zur Herstellung einer Bipolarplatte aus zwei Unipolarplatten.

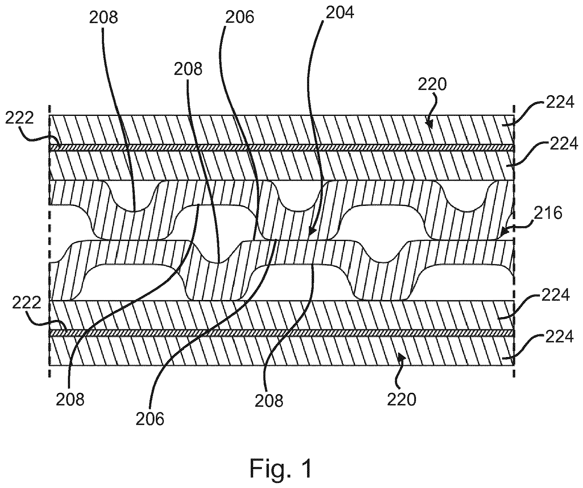

In Figur 1 ist der Ausschnitt eines Brennstoffzellenstapels zu erkennen, der aus mehreren Brennstoffzellen 220 gebildet ist. Jede Brennstoffzelle 220 ist gebildet mit einer Membranelektrodenanordnung 222, welche eine protonenleitfähige Membran umfasst, der auf beiden Seiten jeweils eine Elektrode zugeordnet ist. Die Membranelektrodenanordnung 222 ist ausgestaltet, die elektrochemische Reaktion der Brennstoffzelle auszuführen. Dabei wird ein Brennstoff (z.B. Wasserstoff) an die die Anode bildende Elektrode geführt, wo er katalytisch unter Abgabe von Elektronen zu Protonen oxidiert wird. Diese Protonen werden durch die protonenleitfähige Membran (oder lonen-Austausch-Membran) zur Kathode transportiert. Die aus der Brennstoffzelle abgeleiteten Elektronen fließen über einen elektrischen Verbraucher, vorzugsweise über einen Elektromotor zum Antrieb eines Fahrzeugs, oder zu einer Batterie. Anschließend werden die Elektronen zur Kathode geleitet oder Elektronen an dieser bereitgestellt. An der Kathode wird das Oxidationsmedium (z.B. Sauerstoff oder Sauerstoff enthaltende Luft) durch die Aufnahme der Elektronen zu Anionen reduziert, die unmittelbar mit den Protonen zu Wasser reagieren.

Mit der Hilfe von Bipolarplatten 216 werden der Brennstoff oder das Kathodengas an Gasdiffusionslagen 224 geleitet, die die jeweiligen Gase diffus verteilt an die Elektroden der Membranelektrodenanordnung 222 führen. Der Brennstoff, das Oxidationsmedium und gegebenenfalls ein Kühlmedium werden durch Kanäle 208 der Bipolarplatte 216 geleitet, die durch Stegrücken aufweisende Stege 206 der Bipolarplatten 216 beidseits begrenzt sind. Wie sich aus der Figur 1 ergibt, liegt hierzu jeweils ein Satz der Stegrücken an einer Gasdiffusionslage 224 an, so dass ein in den Kanälen 208 strömender Reaktant an die Gasdiffusionslage 224 und damit an die Elektrode der Membranelektrodenanordnung 222 abgegebenen werden kann.

Die Bipolarplatte 216 umfasst vorliegend zwei aufeinander gebrachte Unipolarplatten die selektiv an ihren zugewandten Stegen 206, insbesondere an deren jeweiligen Stegrücken, miteinander verbunden, insbesondere verschweißt sind. Die sich zugewandten Stege 206 der Unipolarplatten bilden typischerweise mit den zwischen den Stegen 206 liegenden Kanälen 208 Leitungen für ein Kühlmedium aus.

Aus Figur 1 wird außerdem ersichtlich, dass die Stege 206 oder deren Stegrücken der Unipolarplatten nicht zwangsläufig dieselbe Breite aufweisen müssen, so dass auch unterschiedliche Breiten und oder Tiefen für die Kanäle 208 vorliegen können. Zur dauerhaften Verbindung zweier Unipolarplatten sollte jedoch gewährleistet sein, dass zumindest zwei der sich gegenüberliegenden Stege 206 aufeinander aufliegen, die dauerhaft miteinander verbunden, insbesondere verschweißt werden können.

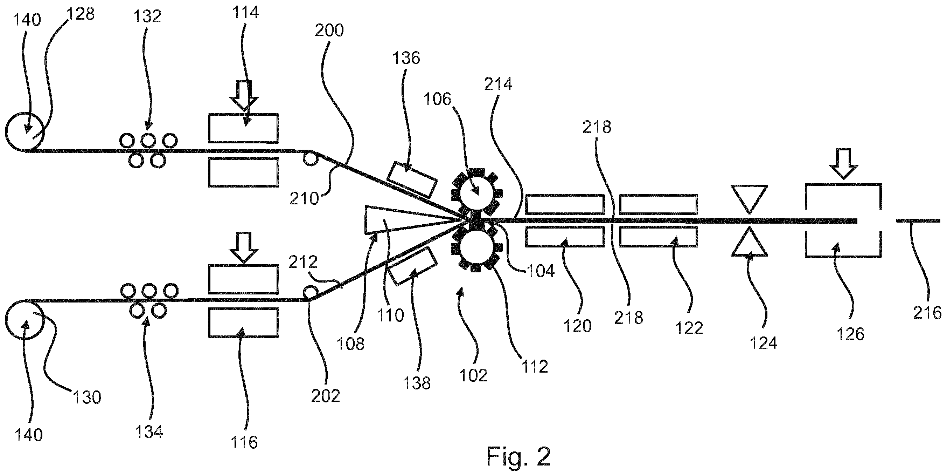

Anhand von Figur 2 wird eine Vorrichtung 100 zur Herstellung eines Bipolarplattenstrangs 214 erläutert, wobei der Bipolarplattenstrang 214 eine Mehrzahl an zusammenhängenden Bipolarplatten 216 einer Brennstoffzelle 218 aufweist. Diese Vorrichtung 100 ist außerdem dazu ausgebildet, eine Bipolarplatte 216 unmittelbar herzustellen; auch ohne vorherige Herstellung eines solchen Bipolarplattenstrangs 214.

Die Rohmaterialien bzw. das Rohmaterial der Bipolarplatte 216 wird vorliegend an einer Abwickeleinrichtung 140 oder an mehreren Abwickeleinrichtungen 140 bereitgestellt, die eine erste Rolle 128 und eine zweite Rolle 130 umfasst bzw. umfassen. Die Rollen 128, 130 stellen das Rohmaterial für einen ersten Unipolarplattenstrang 200 und für einen zweiten Unipolarplattenstrang 202 zur Verfügung. Um das Material der ersten Rolle 128 zu richten, ist der ersten Abwickeleinrichtung 140 der ersten Rolle 128 eine erste Richteinrichtung 132 nachgeordnet. Um das Material der zweiten Rolle 130 zu richten, ist der zweiten Abwickeleinrichtung 140 der zweiten Rolle 130 eine zweite Richteinrichtung 134 nachgeordnet. Das von der ersten Rolle 128 abgewickelte und mit der ersten Richteinrichtung 132 gerichtete Rohmaterial wird mittels einer ersten Prägeeinrichtung 114 derart bearbeitet, dass der erste Unipolarplattenstrang 200 mit einer Mehrzahl von zumindest vorgeformten Stegen 206 und einer Mehrzahl von zumindest vorgeformten, zwischen je zwei benachbarten Stegen 206 verlaufenden Kanälen 208 versehen ist. Das von der zweiten Rolle 130 abgewickelte und mit der zweiten Richteinrichtung 134 gerichtete Rohmaterial wird mittels einer zweiten Prägeeinrichtung 116 derart bearbeitet, dass der zweite Unipolarplattenstrang 202 mit einer Mehrzahl von zumindest vorgeformten Stegen 206 und einer Mehrzahl von zumindest vorgeformten, zwischen je zwei benachbarten Stegen 206 verlaufenden Kanälen 208 versehen ist.

Die so geformten Unipolarplattenstränge 200, 202 werden anschließend in Richtung einer Walzeinrichtung 102, gegebenenfalls unter Zuhilfenahme geeigneter Umlenkeinrichtungen auf einen Walzspalt 104 eines mit Walzstrukturen 112 versehenen Walzenpaares 106 zu bewegt. Die beiden Unipolarplattenstränge 200, 202 laufen dabei in einem Einlaufwinkel bezüglich des Walzspalts 104 aufeinander zu. Bevor sich die beiden Unipolarplattenstränge 200, 202 am Walzspalt 104 treffen, werden diese bei Bedarf zunächst vorerwärmt. Das Vorerwärmen des ersten Unipolarplattenstrangs 200 erfolgt mittels einer ersten Induktionsheizeinrichtung 136 zum induktiven Erwärmen des Materials des ersten Unipolarplattenstrangs 200. Das Erwärmen des zweiten Unipolarplattenstrangs 202 erfolgt mittels einer zweiten Induktionsheizeinrichtung 138 zum induktiven Erwärmen des Materials des zweiten Unipolarplattenstrangs 202.

Die Vorrichtung 100 umfasst außerdem eine Lasereinrichtung 108, die ausgebildet ist, einen Laserstrahl 110 zu emittieren, der im oder am Walzspalt 104 oder in unmittelbarer Nähe des Walzspalts 104 fokussiert oder fokussierbar oder geeignet geformt ist. Der Laserstrahl 110 ist dabei ausgebildet, mindestens einen, vorzugsweise aber mehrere Oberflächenbereiche einer Oberfläche 210, 212 der beiden Unipolarplattenstränge 200, 202 lokal zu erhitzen. Die Erwärmung erfolgt dabei insbesondere an Oberflächenbereichen von den sich zugewandten Oberflächen 210, 212 beim Einlaufen der Unipolarplattenstränge 200, 202 in den Walzspalt 104. Vorzugsweise besitzen dabei die zu erwärmenden Flächen einige der Stegrücken der Stege 206 bzw. sind aus diesen gebildet. Aufgrund der Vorwärmung mittels der Induktionsheizeinrichtungen 136, 138 und mittels der Hitzeeinwirkung durch den Laserstrahl 110, wird das Material der Unipolarplattenstränge 200, 202 auf eine Fügetemperatur erhitzt. Es ist dabei nicht zwangsläufig notwendig, dass die Fügetemperatur über den kompletten Materialquerschnitt der Unipolarplattenstränge 200, 202 vorliegt, so dass eine gradierte Temperaturverteilung im Querschnitt vorliegen kann. Beim fortlaufenden Transport der beiden dann aufeinandergebrachten Unipolarplattenstränge 200, 202 wird an dem mindestens einen Oberflächenbereich, der auf die Fügetemperatur erwärmt ist, mittels des Walzenpaares 106 der Walzeinrichtung 102 ein Fügedruck ausgeübt, derart, dass die beiden Unipolarplattenstränge 200, 202 an diesen Bereichen zu einem gemeinsamen Bipolarplattenstrang 214 gefügt, mithin verschweißt werden.

Die Optik der Lasereinrichtung 108 ist dabei vorzugsweise derart ausgestaltet, den Laserstrahl 110 über das Material der Unipolarplattenstränge 200, 202 seitlich zur Transportrichtung zu verstellen, so dass eine Mehrzahl von auf die Fügetemperatur erhitzter Bereiche an den Unipolarplattensträngen 200, 202 entstehen, die beim Aufbringen eines Fügedrucks mittels der Walzeinrichtung 102 miteinander gefügt, mithin verschweißt werden. Alternativ kann auch eine Strahlaufteilungseinrichtung vorhanden sein, die den Laserstrahl 110 auf eine Mehrzahl von Laserstrahlen 110 aufteilt, um eine Mehrzahl an Oberflächenbereichen eines der oder beider Unipolarplattenstränge 200, 202 auf die Fügetemperatur zu erhitzen.

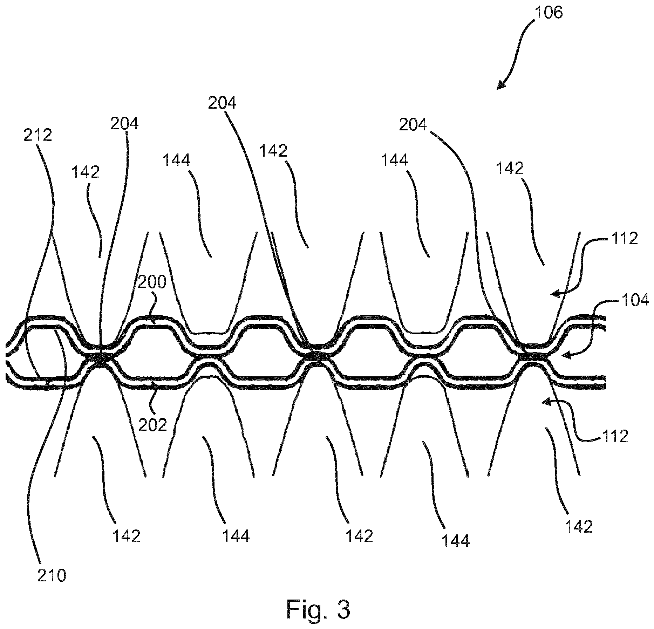

In Figur 3 ist zu erkennen, dass die Walzstruktur 112 der Walzen des Walzenpaares 106 erfindungsgemäß unterschiedliche Walzenerhebungen 142, 144 aufweist, die in einem Kontaktbereich 204 entweder zu einem Fügen der beiden Unipolarplattenstränge 200, 202 aufgrund des einwirkenden Fügedrucks führen oder bei denen dies nicht der Fall ist. Damit liegen erfindungsgemäß also aktive Walzenerhebungen 142 vor, zwischen welchen der Walzspalt 104 zu einem Fügen der beiden sich darin befindlichen Unipolarplattenstränge 200, 202 führt, einerseits, und passive Walzenerhebungen 144, zwischen welchen der Walzspalt 104 nicht zu einem dauerhaften Verbinden der beiden Unipolarplattenstränge 200, 202 führt, andererseits. Die Walzenerhebungen 142, 144 können sich auch nur abschnittsweise am Umfang der betreffenden Walze befinden. Beispielsweise sind die aktiven Walzenerhebungen 142 umfangsseitig, radial in vordefinierten Abständen angeordnet, so dass beispielsweise Step-Nähte oder Heft-Nähte zwischen den Plattensträngen erzeugbar sind, womit sich die Schweißnahtlänge und damit die Prozesszeit reduzieren lassen. In diesem Zusammenhang ist also die Möglichkeit eröffnet, dass jede Walze beim Abrollen je nach Walzstruktur 112 eine definierte Anzahl von kurzen Heft-/Step-Nähten erzeugen kann. Für die passiven Walzenerhebungen 144, oder auch für insgesamt passive Walzen, ist außerdem die Möglichkeit gegeben, dass diese lediglich als Führung für die Plattenstränge ausgebildet sind.

Anstelle des Einsatzes von aktiven Walzenerhebungen 142 und passiven Walzenerhebungen 144 der Walzstruktur 112 lässt sich auch mittels der Lasereinrichtung 108 steuern, in welchen Bereichen der Unipolarplattenstränge 200, 202 das Material bis zu einer Fügetemperatur erwärmt wird, so dass beim Transport durch den Transportspalt 104 dort ein Fügen erfolgt. Hierzu ist die Lasereinrichtung 108 dann ausgebildet, gezielt Bereiche der Oberflächen 210, 212 vom Laserstrahl 110 unbestrahlt oder mit herabgesetzter Leistung bestrahlt zu lassen, womit diese Bereiche nicht auf die zum Fügen benötigte Fügetemperatur erwärmt werden. Diese nicht auf die Fügetemperatur erwärmten Bereiche werden dann trotz des Transports durch den Walzenspalt 104 unter Druckeinwirkung nicht miteinander gefügt.

Wie sich wiederum aus Figur 2 zu der Vorrichtung 100 ergibt, ist der Walzeinrichtung 102 eine Wärmeeinrichtung 120 zum Entspannen des entstandenen Bipolarplattenstrangs 204, insbesondere zum Glühen des Bipolarplattenstrangs 214 nachgelagert. Der Wärmeeinrichtung 120 ist eine Aufbring-einrichtung 122 nachgelagert, die ausgebildet ist, auf mindestens eine, vorzugsweise auf beide Außenoberflächen 218 des Bipolarplattenstrangs 214 eine Dichtung aufzubringen. Der Aufbringeinrichtung 122 der Vorrichtung 100 ist zudem eine Beschichtungseinrichtung 124 nachgelagert, die ausgebildet ist, auf mindestens eine, vorzugsweise beide der Außenoberflächen 218 des Bipolarplattenstrangs 214 eine geeignete Beschichtung aufzubringen. Der Beschichtungseinrichtung 124 ist zudem eine Schneideinrichtung 126 nachgelagert, um die in dem Bipolarplattenstrang 214 miteinander verbundenen Bipolarplatten 216 zu vereinzeln und gegebenenfalls auf ein gewünschtes Endmaß zu beschneiden; auch so werden einzelne Bipolarplatten 216 bereit gestellt.

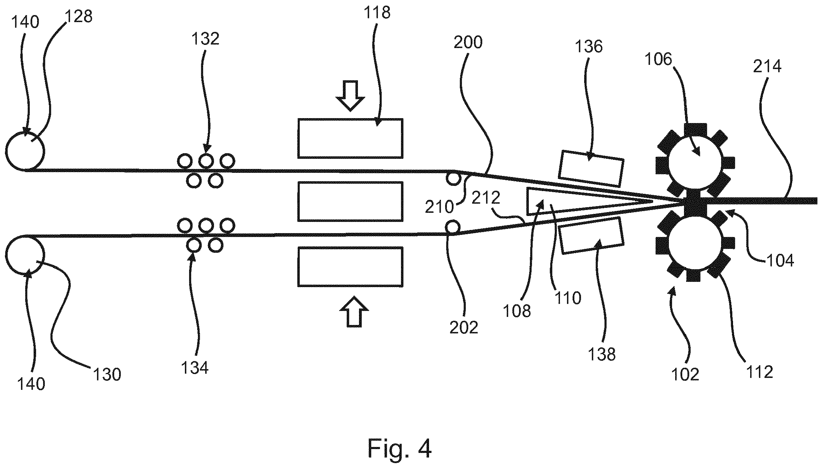

In Figur 4 ist eine weitere Variante der Vorrichtung 100 zur Herstellung der Bipolarplatten 216 gezeigt, die sich von der Variante nach Figur 2 lediglich hinsichtlich der Ausgestaltung der Prägeeinrichtung unterscheidet. Hierbei ist die Prägeeinrichtung als eine kombinierte Prägeeinrichtung 118 gebildet, die das Rohmaterial des ersten Unipolarplattenstrangs 200 und das Rohmaterial des zweiten Unipolarplattenstrangs 202 gemeinsam prägen kann. Es entfällt also die Notwendigkeit einer komplexeren Gestaltung mit einer ersten Prägeeinrichtung 114 und einer zweiten Prägeeinrichtung 116. Zudem verringert sich der Einlaufwinkel der beiden Unipolarplattenstränge 200, 202 in den Walzenspalt 104 der Walzeinrichtung 102, wodurch sich eine erhöhte Verzugsfreiheit des Bipolarplattenstrangs 214 und der aus diesem vereinzelten Bipolarplatten 216 ergibt.

Im Ergebnis ist mit der vorliegenden Erfindung eine Vorrichtung 100 und ein Verfahren zur Herstellung von Bipolarplatten 216 bzw. Bipolarplattensträngen 214 angegeben, die eine Fertigung von Bipolarplatten 216 in sehr großer Stückzahl und in kurzer Taktzeit bieten. Die Vorrichtung 100 und die angegebenen Verfahren sind daher für die Serienfertigung geeignet und senken gegenüber bekannten Verfahren und Vorrichtungen den Ausschussanteil bei der Fertigung von Bipolarplatten 216. Die erfindungsgemäß gebildeten Schweißverbindungen gewährleisten die benötigte Dichtigkeit und die benötigte elektrische Kontaktierung der beiden Unipolarplatten bzw. deren Stränge.

### BEZUGSZEICHENLISTE:

- 100: Vorrichtung
- 102: Walzeinrichtung
- 104: Walzspalt
- 106: Walzenpaar
- 108: Lasereinrichtung
- 110: Laserstrahl
- 112: Walzstruktur
- 114: erste Prägeeinrichtung
- 116: zweite Prägeeinrichtung
- 118: kombinierte Prägeeinrichtung
- 120: Wärmeeinrichtung
- 122: Aufbringeinrichtung (Dichtung)
- 124: Beschichtungseinrichtung (Beschichtung)
- 126: Schneideinrichtung
- 128: erste Rolle (erstes Coil)
- 130: zweite Rolle (zweites Coil)
- 132: erste Richteinrichtung
- 134: zweite Richteinrichtung
- 136: erste Induktionsheizeinrichtung
- 138: zweite Induktionsheizeinrichtung
- 140: Abwickeleinrichtung
- 142: Walzenerhebung, aktiv (Walzstruktur)
- 144: Walzenerhebung, passiv (Walzstruktur)
- 200: erster Unipolarplattenstrang
- 202: zweiter Unipolarplattenstrang
- 204: Kontaktbereich
- 206: Stege
- 208: Kanal
- 210: Oberfläche (erster Unipolarplattenstrang / erste Unipolarplatte)
- 212: Oberfläche (zweiter Unipolarplattenstrang / zweite Unipolarplatte)
- 214: Bipolarplattenstrang
- 216: Bipolarplatte
- 218: Außenoberfläche
- 220: Brennstoffzelle
- 222: Membranelektrodenanordnung
- 224: Gasdiffusionslage

## Patentansprüche

1. Verfahren zur Herstellung eines Bipolarplattenstrangs (214), der eine Mehrzahl von zusammenhängenden Bipolarplatten (216) einer Brennstoffzelle (218) aufweist, umfassend die Schritte:
- Bereitstellen eines ersten Unipolarplattenstrangs (200) und eines zweiten Unipolarplattenstrangs (202), wobei die Unipolarplattenstränge (200, 202) eine Mehrzahl von zumindest vorgeformten Stegen (206) und eine Mehrzahl von zumindest vorgeformten, zwischen je zwei benachbarten Stegen (206) verlaufenden Kanälen (208) umfassen,
- Führen der Unipolarplattenstränge (200, 202) in Richtung eines Walzspalts (104) eines mit einer Walzstruktur (112) versehenen Walzenpaares (106) einer Walzeinrichtung (102), wobei die Walzstruktur (112) der Walzen des Walzenpaares (106) aktive Walzenerhebungen (142) und passive Walzenerhebungen (144) aufweist,
- Lokales Erhitzen mindestens eines Oberflächenbereichs einer Oberfläche (210, 212) von einem der oder von beiden der Unipolarplattenstränge (200, 202), wobei der Oberflächenbereich unmittelbar vor oder bei einem Eintritt der Unipolarplattenstränge (200, 202) in den Walzspalt (104) auf eine Fügetemperatur erwärmt ist, und
- Fügen der Unipolarplattenstränge (200, 202) an dem mindestens einen Oberflächenbereich zu einem Bipolarplattenstrang (214) beim Transport der Unipolarplattenstränge (200, 202) durch den Walzspalt (104) unter Druckeinwirkung, wobei die aktiven Walzenerhebungen (142) die beiden sich im Walzspalt (104) befindlichen Unipolarplattenstränge (200, 202) fügen, und wobei die passiven Walzenerhebungen (144) die beiden sich im Walzspalt (104) befindlichen Unipolarplattenstränge (200, 202) nicht fügen.

2. Verfahren nach Anspruch 1, **dadurch gekennzeichnet, dass** das lokale Erhitzen mittels eines Laserstrahls (110) oder mittels mehrerer Laserstrahlen (110) mindestens einer Lasereinrichtung (108) erfolgt.

3. Verfahren nach Anspruch 1 oder 2, **dadurch gekennzeichnet, dass** die Stege (206) und die Kanäle (208) mittels mindestens einer Prägeeinrichtung (114, 116, 118) geprägt werden bevor die Unipolarplattenstränge (200, 202) bereitgestellt werden.

4. Verfahren nach einem der Ansprüche 1 bis 3, **dadurch gekennzeichnet, dass** die vorgeformten Stege (206) und die vorgeformten Kanäle (208) beim Transport durch den Walzspalt (104) unter Druckeinwirkung mittels der Walzstrukturen (112) in ihre endgültige Form gepresst werden.

5. Verfahren nach einem der Ansprüche 1 bis 4, **dadurch gekennzeichnet, dass** der Bipolarplattenstrang (214) mittels einer Wärmeeinrichtung (120) entspannt wird.

6. Verfahren nach einem der Ansprüche 1 bis 5, **dadurch gekennzeichnet, dass** auf mindestens eine der Außenoberflächen (218) des Bipolarplattenstrangs (214) mittels einer Aufbringeinrichtung (122) mindestens eine Dichtung aufgebracht wird.

7. Verfahren nach einem der Ansprüche 1 bis 6, **dadurch gekennzeichnet, dass** auf mindestens eine der Außenoberflächen (218) des Bipolarplattenstrangs (214) mittels einer Beschichtungseinrichtung (124) mindestens eine Beschichtung aufgebracht wird.

8. Verfahren nach einem der Ansprüche 1 bis 7, **dadurch gekennzeichnet, dass** der Bipolarplattenstrang (214) mittels einer Schneideinrichtung (126) in einzelne Bipolarplatten (216) zerteilt wird.

9. Verfahren zur Herstellung einer Bipolarplatte (216) einer Brennstoffzelle (218), umfassend die Schritte:
- Bereitstellen einer ersten Unipolarplatte und einer zweiten Unipolarplatte, wobei die Unipolarplatten eine Mehrzahl von zumindest vorgeformten Stegen (206) und eine Mehrzahl von zumindest vorgeformten, zwischen je zwei benachbarten Stegen (206) verlaufenden Kanälen (208) umfassen,
- Führen der Unipolarplatten in Richtung eines Walzspalts (104) eines mit einer Walzstruktur (112) versehenen Walzenpaares (106) einer Walzeinrichtung (102), wobei die Walzstruktur (112) der Walzen des Walzenpaares (106) aktive Walzenerhebungen (142) und passive Walzenerhebungen (144) aufweist,
- Lokales Erhitzen mindestens eines Oberflächenbereichs einer Oberfläche (210, 212) von einer der oder von beiden der Unipolarplatten, wobei der Oberflächenbereich unmittelbar vor oder bei einem Eintritt der Unipolarpolarplatten in den Walzspalt (104) auf eine Fügetemperatur erwärmt ist, und
- Fügen der Unipolarplatten an dem mindestens einen Oberflächenbereich zu einer Bipolarplatte (216) beim Transport der Unipolarplatten durch den Walzspalt (104) unter Druckeinwirkung, wobei die aktiven Walzenerhebungen (142) die beiden sich im Walzspalt (104) befindlichen Unipolarplatten fügen, und wobei die passiven Walzenerhebungen (144) die beiden sich im Walzspalt (104) befindlichen Unipolarplatten nicht fügen.

10. Vorrichtung (200) zur Durchführung des Verfahrens nach einem der vorhergehenden Ansprüche, umfassend eine Erhitzungseinrichtung, die ausgebildet ist, mindestens einen Oberflächenbereich einer Oberfläche (210, 212) von einem oder von beiden der beiden Unipolarplattenstränge (200, 202) oder von einer oder von beiden der Unipolarplatten auf eine Fügetemperatur zu erwärmen, wobei eine Walzeinrichtung (102) mit einem zwischen sich einen Walzspalt (104) ausbildenden Walzenpaar (106) vorhanden ist,
wobei die Walzen des Walzenpaares (106) mit einer Walzstruktur (112) versehen ist, die ausgebildet ist, eine Mehrzahl von auf Fügetemperatur erwärmten Oberflächenbereichen der zwei Unipolarplatten oder der zwei Unipolarplattensträngen (200, 202) beim Transport durch den Walzspalt (104) derart zu pressen, dass die beiden Unipolarplattenstränge (200, 202) zu einem Bipolarplattenstrang (214) gefügt werden, oder dass die beiden Unipolarplatten zu einer Bipolarplatte (216) an den Oberflächenbereichen gefügt werden, **dadurch gekennzeichnet, dass** die Walzstruktur (112) der Walzen des Walzenpaares (106) aktive Walzenerhebungen (142) aufweist, die zu einem Fügen der beiden sich im Walzspalt (104) befindlichen Unipolarplattenstränge (200, 202) oder der beiden sich im Walzspalt (104) befindlichen Unipolarplatten führen, und dass die Walzstruktur (112) der Walzen des Walzenpaares (106) passive Walzenerhebungen (144) aufweist, die nicht zu einem Fügen der beiden sich im Walzspalt (104) befindlichen Unipolarplattenstränge (200, 202) oder der beiden sich im Walzspalt (104) befindlichen Unipolarplatten führen.

## Claims

1. A method for producing a bipolar plate strand (214) which has a plurality of contiguous bipolar plates (216) of a fuel cell (218), comprising the steps of:
- providing a first unipolar plate strand (200) and a second unipolar plate strand (202), the unipolar plate strands (200, 202) comprising a plurality of at least preformed webs (206) and a plurality of at least preformed channels (208) extending between two adjacent webs (206) in each case,
- guiding the unipolar plate strands (200, 202) towards a rolling gap (104) of a pair of rollers (106) of a rolling means (102) provided with a rolling structure (112), wherein the rolling structure (112) of the rollers of the pair of rollers (106) comprises active roller elevations (142) and passive roller elevations (144),
- local heating of at least one surface area of a surface (210, 212) of one or both of the unipolar plate strands (200, 202), the surface area immediately before or upon entry of the unipolar plate strands (200, 202) into the rolling gap (104) being heated to a joining temperature, and
- joining the unipolar plate strands (200, 202) at the at least one surface area to form a bipolar plate strand (214) during transport of the unipolar plate strands (200, 202) through the rolling gap (104) under the action of pressure, wherein the active roller elevations (142) join the two unipolar plate strands (200, 202) located in the rolling gap (104), and wherein the passive roller elevations (144) do not join the two unipolar plate strands (200, 202) located in the rolling gap (104).

2. The method according to claim 1, **characterized in that** the local heating takes place by means of one laser beam (110) or by means of several laser beams (110) of at least one laser means (108).

3. The method according to claim 1 or 2, **characterized in that** the webs (206) and the channels (208) are embossed by means of at least one embossing means (114, 116, 118) before the unipolar plate strands (200, 202) are provided.

4. The method according to any one of claims 1 to 3, **characterized in that** the preformed webs (206) and the preformed channels (208) are pressed into their final shape during transport through the rolling gap (104) under the action of pressure by means of the rolling structures (112).

5. The method according to any one of claims 1 to 4, **characterized in that** the bipolar plate strand (214) is relaxed by means of a heating means (120).

6. The method according to any one of claims 1 to 5, **characterized in that** at least one seal is applied to at least one of the outer surfaces (218) of the bipolar plate strand (214) by means of an application means (122).

7. The method according to any one of claims 1 to 6, **characterized in that** at least one coating is applied to at least one of the outer surfaces (218) of the bipolar plate strand (214) by means of a coating means (124).

8. The method according to any one of claims 1 to 7, **characterized in that** the bipolar plate strand (214) is divided into individual bipolar plates (216) by means of a cutting means (126).

9. A method of producing a bipolar plate (216) of a fuel cell (218), comprising the steps of:
- providing a first unipolar plate and a second unipolar plate, the unipolar plates comprising a plurality of at least preformed webs (206) and a plurality of at least preformed channels (208) extending between two adjacent webs (206) in each case,
- guiding the unipolar plates towards a rolling gap (104) of a pair of rollers (106) of a rolling means (102) provided with a rolling structure (112), wherein the rolling structure (112) of the rollers of the pair of rollers (106) comprises active roller elevations (142) and passive roller elevations (144),
- local heating at least a surface area of a surface (210, 212) of one or both of the unipolar plates, the surface area immediately before or upon entry of the unipolar plates into the rolling gap (104) being heated to a joining temperature, and
- joining the unipolar plates at the at least one surface area to a bipolar plate (216) during transport of the unipolar plates through the rolling gap (104) under the action of pressure, wherein the active roller elevations (142) join the two unipolar plates located in the rolling gap (104) and wherein the passive roller elevations (144) do not join the two unipolar plates located in the rolling gap (104).

10. A device (200) for carrying out the method according to any one of the preceding claims, comprising a heating means which is designed to heat at least one surface area of a surface (210, 212) of one or both of the two unipolar plate strands (200, 202) or of one or both of the two unipolar plates to a joining temperature, **characterized in that** a rolling means (102) is present with a pair of rollers (106) forming a rolling gap (104) between them,
wherein the rollers of the pair of rollers (106) are provided with a rolling structure (112) which is designed to press a plurality of surface areas of the two unipolar plates or the two unipolar plate strands (200, 202) heated to joining temperature during transport through the rolling gap (104) in such a way that the two unipolar plate strands (200, 202) are joined to form a bipolar plate strand (214) or that the two unipolar plates are joined to form a bipolar plate (216) at the surface areas, **characterized in that** the rolling structure (112) of the rolls of the roll pair (106) has active roller elevations (142) which result in joining of the two unipolar plate strands (200, 202) located in the rolling gap (104) or of the two unipolar plates located in the rolling gap (104) and **in that** the rolling structure (112) of the rolls of the pair of rollers (106) has passive roller elevations (144) which do not lead to joining of the two strands of unipolar plates (200, 202) located in the rolling gap (104) or of the two unipolar plates located in the rolling gap (104).

## Revendications

1. Procédé de fabrication d'une chaîne de plaques bipolaires (214), qui présente une pluralité de plaques bipolaires contiguës (216) d'une pile à combustible (218), comprenant les étapes consistant à :
- fournir une première chaîne de plaques unipolaires (200) et une seconde chaîne de plaques unipolaires (202), dans lequel les chaînes de plaques unipolaires (200, 202) comprennent une pluralité de traverses au moins préformées (206) et une pluralité de canaux au moins préformés (208) s'étendant chacun entre deux traverses (206) adjacentes,
- conduire les chaînes de plaques unipolaires (200, 202) dans la direction d'une fente de laminage (104) d'une paire de cylindres (106), munie de structure de cylindre (112), d'un dispositif de laminage (102), dans lequel la structure de cylindres (112) des cylindres de la paire de cylindres (106) présentant des saillies de cylindre actives (142) et des saillies de cylindre passives (144),
- chauffer localement au moins une zone superficielle d'une surface (210, 212) de l'une des chaînes de plaques unipolaires (200, 202), ou des deux, dans lequel la zone superficielle est chauffée à une température d'assemblage directement avant ou lors de l'entrée des chaînes de plaques unipolaires (200, 202) dans la fente de laminage (104), et
- assembler les chaînes de plaques unipolaires (200, 202) au niveau de la au moins une zone superficielle pour former une chaîne de plaques bipolaires (214) lors d'un transport des chaînes de plaques unipolaires (200, 202) à travers la fente de laminage (104) sous l'action d'une pression, dans lequel les saillies de cylindre actives (142) assemblent les deux chaînes de plaques unipolaires (200, 202) situées dans la fente de laminage (104), et dans lequel les saillies de cylindre passives (144) n'assemblent pas les deux chaînes de plaques unipolaires (200, 202) situées dans la fente de laminage (104).

2. Procédé selon la revendication 1, **caractérisé en ce que** le chauffage local survient au moyen d'un faisceau laser (110) ou au moyen de plusieurs faisceaux laser (110) d'au moins un dispositif à laser (108).

3. Procédé selon la revendication 1 ou 2, **caractérisé en ce que** les traverses (206) et les canaux (208) sont estampés au moyen d'au moins un dispositif d'estampage (114, 116, 118) avant que les chaînes de plaques unipolaires (200, 202) ne soient fournies.

4. Procédé selon l'une quelconque des revendications 1 à 3, **caractérisé en ce que** les traverses préformées (206) et les canaux préformés (208) sont pressés dans leur forme définitive lors d'un transport à travers la fente de laminage (104) sous l'action d'une pression au moyen des structures de cylindre (112).

5. Procédé selon l'une quelconque des revendications 1 à 4, **caractérisé en ce que** la chaîne de plaques bipolaires (214) est détendue au moyen d'un dispositif de chauffage (120).

6. Procédé selon l'une quelconque des revendications 1 à 5, **caractérisé en ce qu'**au moins un joint d'étanchéité est appliqué sur au moins une des surfaces extérieures (218) de la chaîne de plaques bipolaires (214) au moyen d'un dispositif applicateur.

7. Procédé selon l'une quelconque des revendications 1 à 6, **caractérisé en ce qu'**au moins un revêtement est appliqué sur au moins une des surfaces extérieures (218) de la chaîne de plaques bipolaires (214) au moyen d'un dispositif de revêtement (124).

8. Procédé selon l'une quelconque des revendications 1 à 7, **caractérisé en ce que** la chaîne de plaques bipolaires (214) est divisée en plaques bipolaires individuelles (216) au moyen d'un dispositif de coupe (126).

9. Procédé de fabrication d'une plaque bipolaire (216) d'une pile à combustible (218), comprenant les étapes consistant à :
- fournir une première plaque unipolaire et une seconde plaque unipolaire, dans lequel les plaques unipolaires comprennent une pluralité de traverses au moins préformées (206) et une pluralité de canaux au moins préformés (208) s'étendant entre deux traverses (206) adjacentes,
- conduire les plaques unipolaires dans la direction d'une fente de laminage (104) d'une paire de cylindres (106) prévus avec des structures de cylindre (112), d'un dispositif de laminage (102), dans lequel la structure de cylindre (112) de la paire de cylindres (106) présentant des saillies de cylindre actives (142) et des saillies de cylindre passives (144),
- chauffer localement au moins une zone superficielle d'une surface (210, 212) d'une des plaques unipolaires, ou des deux, dans lequel la zone superficielle est chauffée à une température d'assemblage directement avant ou lors de l'entrée des plaques unipolaires dans la fente de laminage (104), et
- assembler les plaques unipolaires au niveau de la au moins une zone superficielle pour former une plaque bipolaire (216) lors d'un transport des plaques unipolaires à travers la fente de laminage (104) sous l'action d'une pression, dans lequel les saillies de cylindres actives (142) assemblent les deux plaques unipolaires situées dans la fente de laminage (104), et dans lequel les saillies de cylindre passives (144) n'assemblent pas les deux plaques unipolaires situées dans la fente de laminage (104).

10. Dispositif (200) pour la mise en œuvre du procédé selon l'une quelconque des revendications précédentes, comprenant un dispositif de chauffage qui est réalisé pour chauffer au moins une zone superficielle d'une surface (210, 212) d'une des chaînes de plaques unipolaires (200, 202), ou des deux, ou d'une des plaques unipolaires ou des deux à une température d'assemblage, dans lequel un dispositif de laminage (102) présentant une paire de cylindres (106) réalisant une fente de laminage (104) entre eux est présent,
dans lequel les cylindres de la paire de cylindres (106) sont prévus avec une structure de cylindre (112) qui est réalisée pour presser une pluralité de zones superficielles des deux plaques unipolaires ou des deux chaînes de plaques unipolaires (200, 202) chauffées à la température d'assemblage via un transport à travers la fente de laminage (104) de telle sorte que les deux chaînes de plaque unipolaires (200, 202) sont jointes pour former une chaîne de plaques bipolaires (214), ou que les deux plaques unipolaires sont assemblées pour former une chaînes de plaques bipolaires (216) au niveau des zones superficielles, **caractérisé en ce que** la structure de cylindre (112) des cylindres de la paire de cylindres (106) présente des saillies de cylindre actives (142) qui conduisent à un assemblage des deux chaînes de plaques unipolaires (200, 202) situées dans la fente de laminage (104) ou des deux plaques unipolaires situées dans la fente de laminage (104), et **en ce que** la structure de cylindre (112) des cylindres de la paire de cylindres (106) présente des saillies de cylindre passives (144) qui ne conduisent pas à un assemblage des deux chaînes de plaques unipolaires (200, 202) situées dans la fente de laminage (104) ou des deux plaques unipolaires situées dans la fente de laminage (104).
